# EUROPEAN PATENT SPECIFICATION

(11) **EP 3 922 578 B1**
(45) Date of publication and mention of the grant of the patent: **14.09.2022**
(21) Application number: 20712413.2
(22) Date of filing: 06.02.2020
(51) Int. Cl.: B65D 85/804

(54) **CAPSULE OF COMPOSITE MATERIAL HAVING REINFORCED SIDE AND BASE WALL**
KAPSEL AUS VERBUNDMATERIAL MIT VERSTÄRKTEN SEITEN- UND BODENWAND
CAPSULE DE MATÉRIAU COMPOSITE AVEC PAROI LATÉRALE ET BASE RENFORCÉE

(30) Priority: 08.02.2019 PT 2019115300
(43) Date of publication of application: 15.12.2021
(73) Proprietor: Novadelta - Comércio e Indústria de Cafés, Lda, 1950-041 Lisboa (PT)
(72) Inventor: NABEIRO, Rui Miguel, 7370-112 Campo Maior (PT); DE FIGUEIREDO BRANCO, João André, 1885-091 Moscavide (PT); GONÇALVES MARTINS, Marco Filipe, 2480-093 Pedreiras Pedreiras (PT)
(74) Representative: Ferreira Pinto, Francisca
(86) International application number: PCT/PT2020/050005
(87) International publication number: WO 2020/162776

(56) References cited:
- EP-A1- 3 044 124
- EP-A1- 3 045 406
- EP-B1- 3 044 124
- IT-A1- MI20 082 282
- US-A1- 2018 178 972
- US-B2- 10 159 375
- Soo Hyun Sung ET AL: "Development of polylactic acid nanocomposite films reinforced with cellulose nanocrystals derived from coffee silverskin", Carbohydrate Polymers, vol. 169, 1 August 2017 (2017-08-01), pages 495-503, XP055701056, GB ISSN: 0144-8617, DOI: 10.1016/j.carbpol.2017.04.037
- Robert Masirek ET AL: "Composites of poly(L-lactide) with hemp fibers: Morphology and thermal and mechanical properties", Journal of Applied Polymer Science, vol. 105, no. 1, 5 July 2007 (2007-07-05), pages 255-268, XP055701042, US ISSN: 0021-8995, DOI: 10.1002/app.26090

## Description

### Field of the invention

The present invention refers to the field of capsules for preparing beverages and produced in a composite material comprising a non-synthetic substance, in general, and that besides present a reinforced structural configuration, in particular.

### Background of the invention

The prior art includes several documents related with capsules for preparing beverages by means of mixture of an edible substance inside thereof with a pressurized flow, and disclosing solutions for reinforcing the structural capacity of said capsules, in particular in case the capsule is produced in a synthetic material including bio-polymers or other substances with viability of composting by natural means, as substitutes of the usual synthetic materials of fossil origin. In particular, in certain capsules, the base wall of a container part is the flow exit surface and the one submitted to a greater hydraulic pressure and, therefore, structural solicitation.

The document EP 1807318 B1 discloses a capsule of the type of the present invention comprising a container part that presents ribs on the sidewall and ribs on the base wall. The ribs on the sidewall seem to have an increasing thickness towards the perimeter of the sidewall.

The document EP 1961676 B1 discloses a capsule whereby the base wall presents a wall portion of bigger wall thickness than a central region, relative to the remaining base wall, whereby this wall portion extends on the downstream-oriented side, such as a plurality of ribs.

The document EP 2408691 B1 discloses a capsule whereby the container part is made of a bio-degradable polymer and whereby the base wall presents a plurality of elements in a radial disposition and a plurality of flow passageways in the cavity spaces conformed between said radial elements, whereby said passageways are not aligned with said radial elements.

The document WO 2015/145361 A1 discloses a capsule whereby the base wall presents a portion of convex surface provided on the downstream-oriented surface and that extends with a thickness that decreases towards the edge of its convexity.

The prior art further includes several documents relating to composite substances presenting a composition that includes synthetic polymers, notably in a thermoplastic matrix, and bio-polymers.

The document EP 2218653 A1 discloses a biologically decomposable capsule that includes a shell, a layer of fibre and a closure membrane that are in each case constituted by a biologically decomposable material.

The document WO 03/ 000810 A1 discloses an improved composition of impregnation and coating based upon emulsions of polymers and latex of vegetal origin such as shell and other ashes, including ash of coffee shell.

The document WO 2012/077066 A1 discloses a capsule for preparing a liquid product comprising a base wall that presents a structure in layers with at least one layer made of a first compostable material and at least a layer made of a second compostable material that does not endure a noticeable softening and/or melting at a temperature of 70°C - 120 °C. In particular, said first compostable material is selected from the group that includes polymers derived from biomasses, synthetic polymers, polymers produced by microorganisms or genetically modified bacteria, polymers of fossil monomers, and mixtures of said polymers with or without additives. Said second compostable material is selected from paper, such as cellulose paper and, preferentially 100% of cellulose paper, cardboard, cellophane paper and cellulose acetate, in particular, the layer of said first material is disposed internally in relation to the layer of said second material. The disclosed capsule can be integrally constituted by compostable material. This document describes definitions of "compostable" and of "bio-degradability", both of which are in the scope of the present application.

The document US 2012/0097602 A1 discloses a capsule of similar type, whereby the filter component presents a mixture of 0 to 60% of cellulose fibres and of about 40 to 100 of compostable polyester fibres.

The document WO 2015/121489 A1 discloses a capsule of similar type that comprises a bio-degradable and compostable polymer material, or a mixture of said materials, and a percentage of filling agents, whereby the polymer materials include agro-polymers and bio-polyesters.

The document WO 2015/162632 A1 discloses a compound with a thermoplastic polymer and a filling means for producing food packages, in particular coffee capsule, and that also includes polysaccharides derived from agro-polymers. Said capsule presents a single layer and is made from a material comprising a bio-degradable and compostable polymer, with a percentage of filling means between 15% and 80% of at least one aliphatic polyester or aromatic-aliphatic containing from 15% to 90% of one or more filling means with a D50 granulometry.

The document FR 3035085 also discloses a capsule produced from a compound including agro-polymers from a particular list of possible origins of such agro-polymers.

The documents WO 2013/131117 A1 and WO 2018/050544 A1 also disclose capsules of the type of the present invention, with reinforcement means of sidewall and of part of the upstream wall.

The documents EP 3045406 A1 and EP US 10,159,375 B2 relate to capsules of the type of the present invention, whereby said capsules comprise container parts that do not present the technical features disclosed herein.

The use of this type of materials comprising bio-polymers presents, however, two main constrains with relation to the usual synthetic materials of fossil origin: a substantial increase of the material cost per quantity unit thereof, and a reduction of structural resistance, that on its turn contributes to aggravate the cost of package.

None of the documents in the prior art discloses a composite substance presenting a structural configuration that provides an optimization of the structural resistance and, therefore, of the quantity of material used.

### General description of the invention

The objective of the present invention is to provide a capsule for preparation of beverages by means of injection of a pressurized flow at a flow pressure of at least 8 bar, and provided in a composite substance comprising bio-polymers, said capsule being configured so that presents better structural resistance, including in the sidewall and in the base wall of the container part.

This objective is solved according to the present invention by means of a capsule according to claim 1, whereby preferred embodiments are disclosed in the dependent claims.

An associated objective is to provide a flow exit disposition through the base wall of the container part that provides a better distribution of the hydraulic pressure and load losses at the beverage flow exit, thereby contributing to reduce the needs of structural reinforcement of the base wall.

Another associated objective is to provide a composite substance presenting a composition that includes synthetic polymers and bio-polymers, in particular using fibres of natural materials instead of biodegradable plastic materials, in particular at least comprising one bio-polymer of vegetable origin and adapted so that provides thermal, mechanical, fluid transport (permeability) and surface transport properties (wettability, friction coefficient), and other properties, advantageous in view of several uses and with reduction of costs.

In particular, at least the container part of the capsule is produced by means of injection moulding of a synthetic material comprising at least one bio-polymer associated with processing at least one of: sugarcane, cassava, corn and coffee grounds, in particular of coffee silverskin.

In particular, the capsule is produced in a material that comprises between 60 and 90% of a material associated with at least one of: sugarcane, cassava and corn, whereby the remaining composition includes the PLA polymer, or similar.

Said composite substance can include at least one of:
- a polyethylene from the list that includes high density polyethylenes and low density polyethylenes (LDPE),
- polycaprolactone (PCL);
- thermoplastic amid (TPS);
- copolymer of ethylene vinyl alcohol (EVOH);
- polyvinylidene chloride (PVDC), and
- a compatibilization agent.

Said composite substance can include a polyethylene grafted with maleic anhydride (PE-co-MA) as compatibility agent.

### Description of the Figures

The invention shall be hereinafter explained in greater detail based upon preferred embodiments and the attached Figures.

The Figures show, in simplified schematic representations:
- Figure 1:: side view of an embodiment of capsule of the type of the present invention;
- Figure 2:: top view of an embodiment of capsule (1);
- Figure 3:: side-cut view of an embodiment of a capsule (1) according to the present invention;
- Figure 4:: side-cut view of an embodiment of a capsule (1) according to the present invention;
- Figure 5:: top view of an embodiment of a container part (11) of a capsule according to the present invention;
- Figure 6:: side-cut view of an embodiment of a container part (11) of a capsule (1) according to the present invention;
- Figure 7:: side-cut view of an embodiment of a container part (11) of a capsule (1) according to the present invention;
- Figure 8:: side-cut view of an embodiment of a container part (11) of a capsule (1) according to the present invention;
- Figure 9:: side-cut view of an embodiment of a container part (11) of a capsule (1) according to the present invention;
- Figure 10:: side-cut view of an embodiment of a container part (11) of a capsule (1) according to the present invention;
- Figure 11:: side-cut view of an embodiment of a container part (11) of a capsule (1) according to the present invention;
- Figure 12:: top perspective view of an embodiment of a container part (11) of a capsule (1) according to the present invention.

### Detailed description of preferred embodiments of the invention

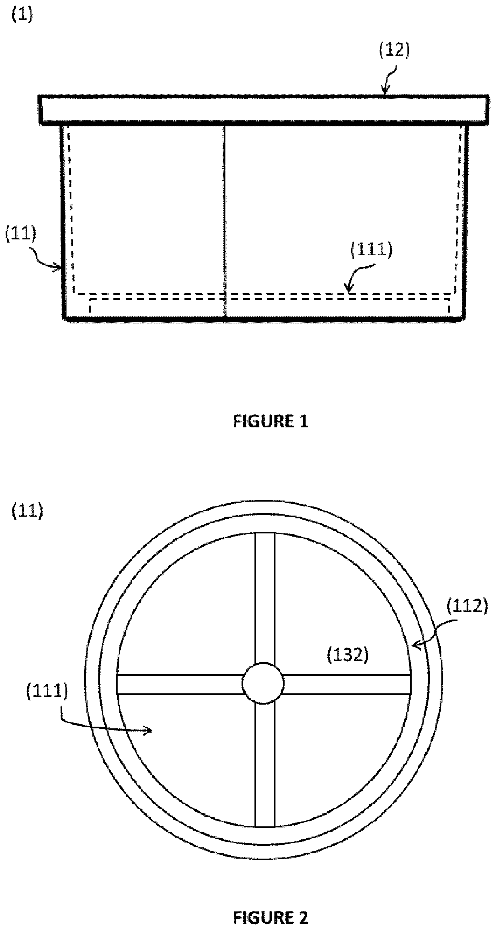

Capsules of the type of the present invention are used in machines for preparing beverages by means of injection of a pressurized flow at a flow pressure of at least 8 bar, sometimes of more than 15 bar, and basically comprise a container part (11) and a lid part (12) adapted so that can close the previous one (see **Figures 1** and **2**). Said pressurized flow is made to enter into the capsule through the lid part (12) and exit through the base wall (111) of the container part. The container part (11) presents a base wall (111) and a sidewall (112), for example of cylindrical shape, extending in symmetric manner with relation to a central axis (x) of the capsule. The capsule can be provided in a synthetic material comprising bio-polymers, in general, so as to mitigate the associated environmental impact. In the particular case where said base wall (111) is also the beverage exit wall, then it is also it that is submitted to bigger structural requirements, as a result from the hydraulic pressure upstream thereof.

The capsule can present structural reinforcement means with the shape of ribs, adapted so as to structurally reinforce the side and base walls thereof. The base wall (111) can present base reinforcement ribs (131), and the sidewall (112) can present side reinforcement ribs (132).

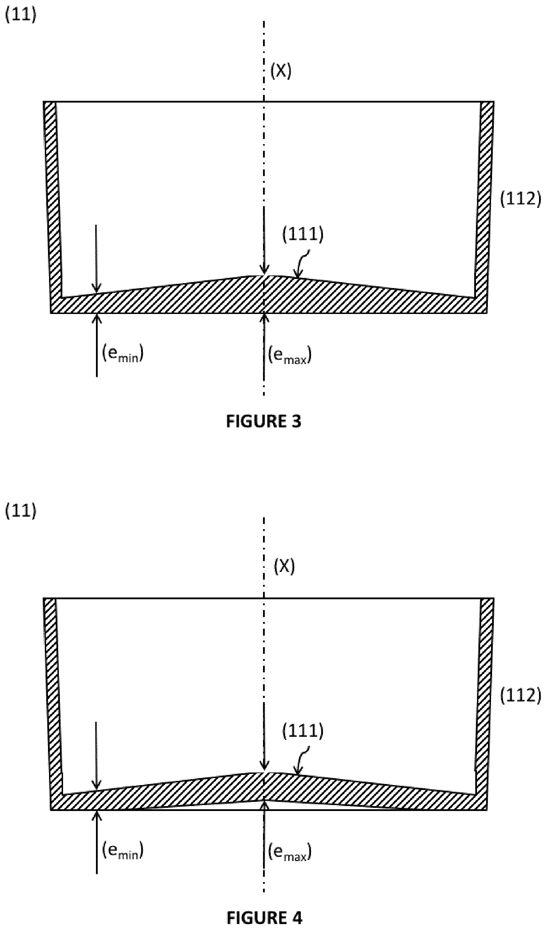

As depicted in representative schematic view **Figure 3****,** a capsule (1) according to the present invention comprises a container part (11) whereby the base wall (111) presents a wall thickness that increases towards the centre thereof, and of at least approximately symmetric shape with relation to said central axis (X) and in at least approximately uniform manner all around thereof.

In particular, it has been demonstrated as sufficient, at least for a given range of operation flow pressures, when said increase of wall thickness of the base wall (111) is only provided in the upstream-oriented face thereof, so that the downstream-oriented face retains a planar form devoid of cavities or projections at least in the central region thereof.

The base wall (111) can present, in general, a convex shape extending upstream, including with increase of the wall thickness towards the central region thereof (see **Figure 4**).

As the applicant was able to experimentally demonstrate, said configurations of the base wall (111) provide a substantial increase of structural resistance of the base wall (111), in particular in the central region thereof.

It is preferred when said increase of wall thickness of the base wall (111) unfolds at least on a central region thereof, for example on a central region that extends in a radial extension corresponding to 20 up to 50% of the free interior dimension of said base wall (111).

It is preferred when said increase of the wall thickness of the base wall (111) unfolds in at least approximately continuous manner.

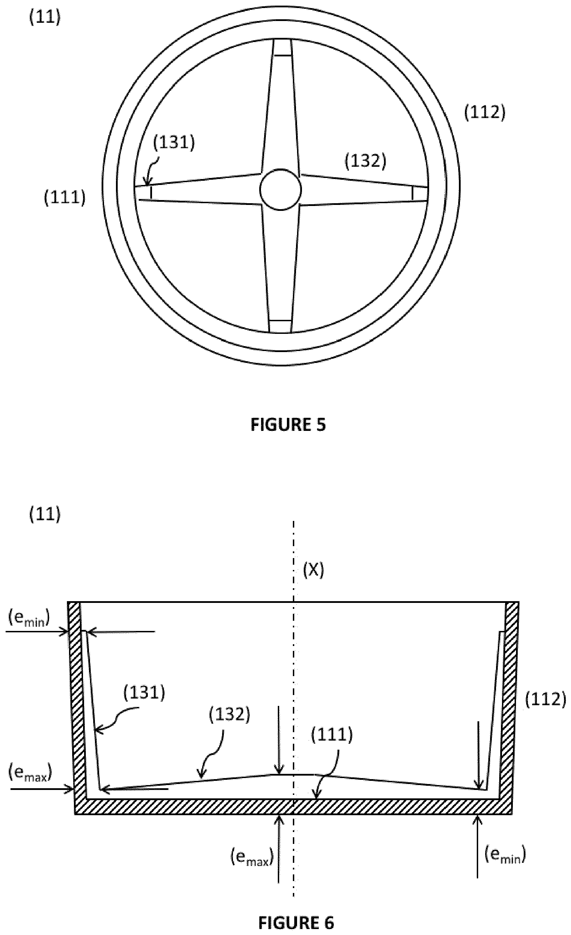

The capsule (1) according to the present invention, as represented in Figures 5 and 6, is characterized in that presents a container part (11) that presents reinforcement means including:
- lateral reinforcement means (131) configured so that present an increase of thickness of the sidewall (112) towards said base wall (111), and
- base reinforcement means (132) that present an increase of wall thickness of the base wall (111) towards the centre of said base wall (111),
whereby said reinforcement means (131, 132) are provided as ribs that extend in the interior surface of the container part (11), so that provide a localized increase of the wall thickness of said container part (11), said increase of wall thickness generally extending in the downstream direction and towards the centre thereof.

It is herewith advantageously provided a solution that avoids a generalized increase of wall thickness of said structural reinforcement means, notably by reinforcement means, for example of ribs type, with an uniform thickness along its extension, but rather there is provided a gradual increase of thickness of said reinforcement means, and thereby of structural reinforcement of said base wall (111) and sidewall (112) of the container part (11), at measure with the requirements of the pressurized flow inside the capsule (1) during the beverage preparation process.

As represented, said container part (11) can comprise lateral reinforcement ribs (131) provided as ribs that extend on the interior face of the sidewall (12) along the prevailing flow direction and that present an increase of wall thickness towards the base wall (111), whereby said increase of wall thickness extends in at least one of, preferentially both of, the circular and radial directions of said lateral reinforcement ribs (131), with relation to the central axis (X).

Moreover, said container part (11) can comprise base reinforcement ribs (132) that extend in a radial configuration on the base wall (111) of the container part (11), and that present an increase of wall thickness along the radial direction, preferentially continuous and gradual, in the direction of the central region of the base wall (111).

It is particularly preferred in a capsule (1) according to the present invention, when at least part of, preferentially all, of said first and second reinforcement ribs (131, 132) extend in aligned manner relative to each other, preferentially extend continuously between each other, so that provide an increase at least approximately continuous of the wall thickness of the container part (11) along the sidewall (12) and until the central region of the base wall (111).

As shall be readily understood by an expert in the field, the aforementioned described configuration of the structural reinforcement ribs, extending continuously along at least part of the sidewall (112) and base wall (111), and with a gradual and continuous increase of dimension in at least one, preferentially in both the radial and angular directions, in the direction of the central region of said base wall (111), provides an optimized structural reinforcement in view of the prevailing requirements during the process of extraction of a beverage under pressure.

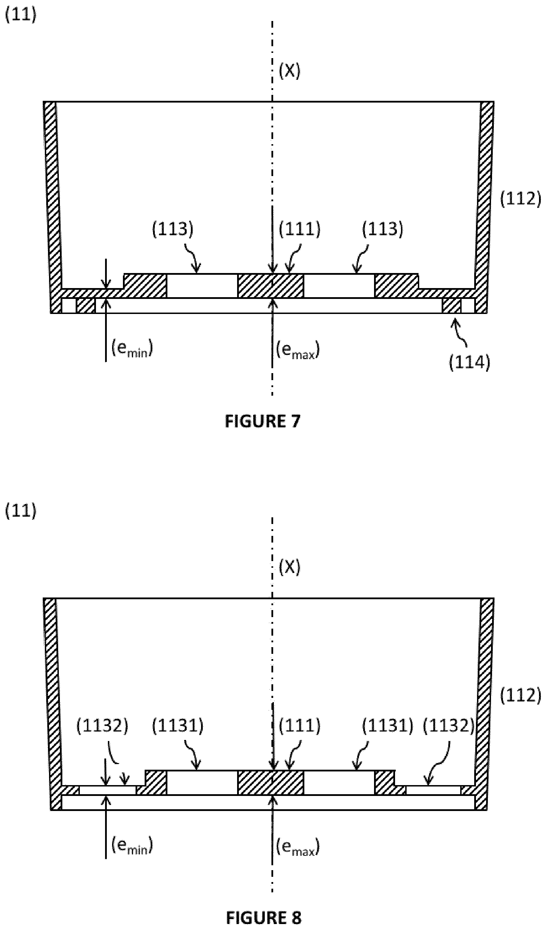

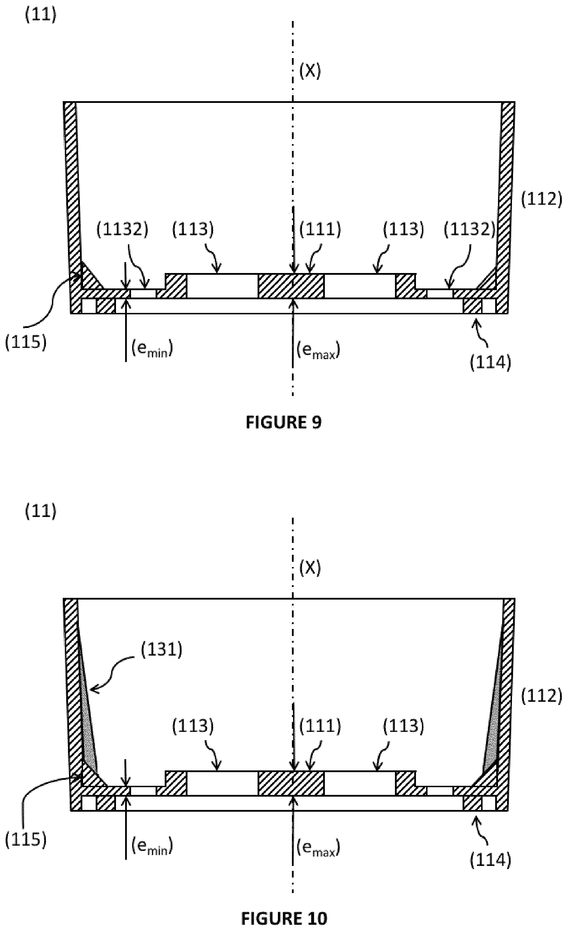

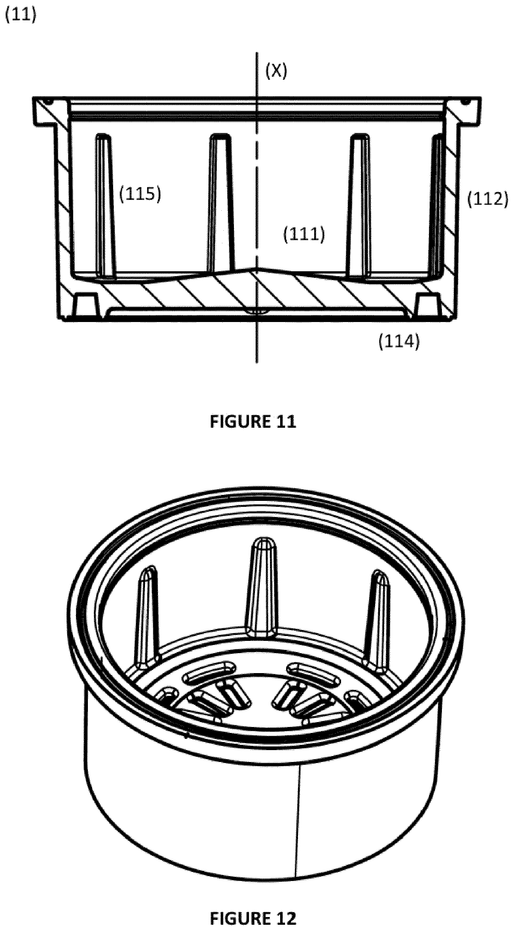

According to another aspect of the present invention, schematically represented in **Figures 7** to **10** and further in **Figures 11** and **12****,** said capsule (1) can further present a plurality of flow passage zones (113) on said base wall (111), configured and disposed so as to balance the pressure forces exerted by the hydraulic flow upstream thereupon.

In particular, said base wall (111) can present a plurality of flow passage zones (113) provided with an elongated form, preferentially with a relation between length and width comprised between 2 and 10, particularly preferentially between 3 and 6, whereby part of said flow passage zones (1131) extends along an at least approximately radial direction radial, and at least part of the flow passage zones (1132) extends along a circular direction.

This particular configuration and disposition of the flow passage zones (113) advantageously provides a better distribution of the hydraulic pressure upstream upon the base wall (111), thereby contributing to improving the requirements thereof in terms of material quantity (i.e., wall thickness) and structural reinforcement, especially in the central region thereof.

It is preferred when said base wall (111) presents a plurality of flow passage zones (113) including first flow passage zones (1131) of radial orientation provided in a central region that presents a bigger wall thickness, and second flow passage zones (1132) of circular orientation provided on a peripheral region that presents smaller wall thickness, whereby said first and second flow passage zones (1131, 1132) presents characteristic dimensions, in particular length and width, at least approximately similar.

Moreover, said base wall (111) can present a plurality of first flow passage zones (1131) disposed along an at least approximately radial orientation provided on a central region of wall thickness bigger and/or increasing of said base wall (111).

Complementarily to the aforementioned aspect, said base wall (111) can present a plurality of second flow passage zones (1132) disposed along an at least approximately angular orientation angular provided on a peripheral region of wall thickness smaller and/or constant of said base wall (111).

In particular, said base wall (111) can comprise a plurality of regions adapted for flow passageway, whereby said regions for flow passageway (113) are provided as at least one of: openings and weakened material zones adapted so that break under the effect of the hydraulic pressure upstream thereof.

As referred, the capsule (1) according to the present invention is provided in a composite substance that comprises bio-polymers.

In particular, the capsule (1) can be produced by means of injection of said composite substance in moulds, at least of said container part (11), preferentially also of said lid part (12) .

In particular, said composite substance can present a composition that includes natural fibres adapted so that provide dimensional and functional characteristics similar to those of said synthetic polymers, preferentially including natural fibres resulting from the processing of vegetable species, such as for example coffee, cinnamon, sugarcane, corn and cassava.

Moreover, it is particularly preferred when said natural fibres include at least one of, preferentially at least two of the list of natural fibres resulting from the processing of:
- green coffee beans;
- cinnamon;
- sugarcane;
- corn;
- cassava.

According to a particularly preferred aspect, the capsule (1) according to the present invention is provided in a composite substance that presents a thermoplastic matrix reinforced with natural fibres, including coffee silverskin fibre, and whereby the polymeric matrix that groups the silverskin fibre comprises polymers of natural origin, including derivate of cellulose and aliphatic polyesters.

## Claims

1. Capsule for preparing edible products, such as for example aromatic beverages,
said capsule (1) comprising a container part (11) and a lid part (12),
the container part (11) presenting a base wall (111) that is also the beverage exit wall, and a sidewall (112) extending with relation to a central axis (X), and with structural configuration adapted for resisting interior pressures of at least 4 bar, preferentially at least 8 bar,
the container part (11) provided in a composite substance presenting a composition that includes biopolymers,
**characterized**
**in that** the container part (11) presents reinforcement means including:
- lateral reinforcement means (131) configured so that represent an increase of thickness of the sidewall (112) towards the base wall (111), and
- base reinforcement means (132) that represent an increase of thickness of the base wall (111) towards the centre of the base wall (111),
whereby said reinforcement means (131, 132) are provided as ribs that extend in the interior surface of the container part (11), so that provide a localized increase of the wall thickness of the container part (11), when seen in side cut, said increase of wall thickness generally extending in the downstream direction and to the centre thereof.

2. Capsule according to claim 1, **characterized**
**in that** the container part (11) comprises lateral reinforcement ribs (131) provided as ribs that extend in the inwards face of the lateral wall (12) along the prevailing flow direction and that present an increase of the wall thickness inwards and towards the base wall (111), whereby said increase of wall thickness extends in at least one of, preferentially both, the circular and radial directions of said lateral reinforcement ribs (131), in relation to the central axis (X), and whereby said increase of wall thickness preferentially extends continuously and at least inwards relative to the interior of the capsule.

3. Capsule according to claims 1 or 2, **characterized**
**in that** the container part (11) comprises base reinforcement ribs (132) that extend in a radial configuration in the base wall (111) of the container part (11), and that present and increase of the wall thickness along the radial direction, preferentially continuous and gradual, in the direction of the central region of the base wall (111).

4. Capsule according to claims 1 to 3, **characterized**
**in that** at least part of, preferentially all of, said first and second reinforcement ribs (131, 132) extend in aligned manner relative to each other, preferentially extend in continuous manner relative to each other, so that provide an increase at least approximately continuous of wall thickness of the container part (11) along the sidewall (12) and up to the central region of the base wall (111).

5. Capsule according to claims 1 to 4, **characterized**
**in that** the base wall (111) presents a wall thickness that increases in the direction of the central region, along at least part of the radial extension, so that can provide greater structural resistance at a central region of the base wall (111).

6. Capsule according to claims 1 to 5, **characterized**
**in that** the base wall (111) presents a wall thickness that presents a relation between a bigger and a smaller wall thickness comprised between 1,1 and 4, preferentially comprised between 1,2 and 2, and
**in that** the base wall (111) presents a bigger wall thickness at least of the upstream-oriented face and at a central region that presents at least one of: a spot shape, a circular shape, a radial shape, and a ring shape.

7. Capsule according to any one of claims 1 to 6, **characterized**
**in that** the base wall (111) presents a central region with a bigger wall thickness, in particular including the maximum wall thickness (emax), than the wall thickness of a region peripheral and adjacent to said central region, in particular including the minimum wall thickness (eₘᵢₙ), whereby at least part of the region of bigger wall thickness extends further downstream with relation to the remaining base wall (111) and whereby said central region extends in a radial extension bigger than 0,2, preferentially bigger than 0,3, particularly preferentially similar or bigger than 0,5 times the characteristic dimension defined by the base wall (111), in particular the interior diameter of the container part (11) next to the base wall (111).

8. Capsule according to any one of claims 1 to 7, **characterized**
**in that** the base wall (111) presents a configuration whereby at least the upstream-oriented face presents a shape of convex type, for example of conic type, with the vertex extending upstream in at least approximately aligned with said central axis (X), and so that the wall thickness increases in the central region with relation to the periphery region of the base wall (111).

9. Capsule according to any one of claims 1 to 8, **characterized**
**in that** the base wall (111) presents a downstream-oriented face that presents a planar shape, and
**in that** the increase of wall thickness is at least approximately continuous along at least part of the radial extension of the base wall (111), preferentially at least in a central region thereof.

10. Capsule according to any one of claims 1 to 9, **characterized**
**in that** the base wall (111) presents an upstream-oriented face that also presents a shape of conic type extending upstream, so that the increase of wall thickness is provided on said radial extension, with relation to the remaining radial extension on the periphery region, of the base wall (111).

11. Capsule according to any one of claims 1 to 10, **characterized**
**in that** the base wall (111) presents a base projection (114) that extends downstream along a circular alignment defining a ring configuration in the proximity of a projection of sidewall (12), so that confines a cavity space in the perimeter region of the base wall (111), whereby said base projection (114) projects in an extension similar to said projection of the sidewall (12) and presents a wall thickness bigger than the wall thickness of said projection of sidewall (12) .

12. Capsule according to claim 11, **characterized**
**in that** the downstream-oriented surface of the base wall (111) extends in a plane downstream of the plane of said cavity-like space configured by said projections of sidewall (112) and base wall (114), and in that there is preferentially provided a plurality of radial connection elements distributed along said cavity space.

13. Capsule according to any one of claims 1 to 12, **characterized**
**in that** the base wall (111) presents a plurality of flow passage zones (113) provided with an elongated shape, in particular with a relation between length and width comprises between 2 and 10, preferentially between 3 and 6, whereby part of said flow passage zones (1131) extends along a direction at least approximately radial, and at least part of said flow passage zones (1132) extends along a circular direction.

14. Capsule according to any one of claims 1 to 13, **characterized**
**in that** the base wall (111) presents a plurality of flow passage zones (113) including first flow passage zones (1131) of radial orientation provided on a central region that presents a bigger wall thickness, and second flow passage zones (1132) of circular orientation provided in the periphery region that presents smaller wall thickness, whereby said first and second flow passage zones (1131, 1132) present characteristic dimensions, in particular length and width, at least approximately similar.

15. Capsule according to any one of claims 1 to 14, **characterized**
**in that** the base wall (111) presents a plurality of first flow passage zones (1131) disposed along an at least approximately radial orientation provided on a central region of bigger and/or increasing wall thickness of the base wall (111), and in that the base wall (111) presents a plurality of second flow passage zones (1132) disposed along an at least approximately angular orientation provided on a periphery region of smaller and/or constant wall thickness of the base wall (111).

16. Capsule according to any one of claims 1 to 15, **characterized**
**in that** the base wall (111) comprises a plurality of regions adapted for flow passage, whereby said regions for flow passage (113) are provided as at least one of: openings and weakened material zones adapted so that break under the effect of hydraulic pressure upstream thereof.

17. Capsule according to any one of claims 1 a 16, **characterized**
**in that** the composite substance presents a composition that includes natural fibres including at least one, preferentially at least two from the list of natural fibres resulting from the processing of:
- green coffee beans;
- cinnamon;
- sugar cane;
- corn;
- cassava.

18. Capsule according to any one of claims 1 to 17, **characterized**
**in that** the composite substance presents a thermoplastic matrix reinforced with natural fibres, including coffee silverskin fibre, and
**in that** the polymeric matrix that groups the silverskin fibre comprises polymers of natural origin, including derivatives of cellulose and aliphatic polyesters.

## Patentansprüche

1. Kapsel zur Vorbereitung von essbaren Produkten, wie z.Bsp. aromatische Getränke,
in dem genannte Kapseln einen Behälter (11) und einen Deckel (12) umfasst,
in dem der Behälter (11) eine Grundwand (111), die auch die Getränkeausgangswand ist, und
eine Seitenwand (112) aufweist, die sich bzgl. der Zentralachse (X) erweitert und mit struktureller Gestaltung geeignet dem Innendruck standzuhalten von mindestens 4 Bar, vorzugsweise mindestens 8 Bar,
der Behälter (11) vorgesehen in einer zusammengesetzten Substanz, die eine Zusammensetzung bestehend aus Biopolymeren aufweist
**dadurch gekennzeichnet,**
**dass** der Behälter (11) Verstärkungsmittel aufweist beinhaltend:
- seitliche Verstärkungsmittel (131) so festgelegt, um einen Dichtungsanstieg der Seitenwand (112) gegenüber der Grundwand (111) darzustellen, und
- Grundverstärkungsmittel (132), die einen Dichtungsanstieg der Seitenwand (111) gegenüber der Grundwandsmitte (111) aufweisen,
wobei genannte Verstärkungsmittel (131, 132) als Rippen vorgesehen sind, die sich in die Innenoberfläche des Behälters (11) erweitern, so um einen lokalisierten Anstieg der Wanddichte des Behälters (11) festzulegen, wenn im Seitenschnitt betrachtet, in dem sich genannter Anstieg der Wanddichte allgemein stromabwärts und mittig davon erstreckt.

2. Kapsel gemäß Anspruch 1 **dadurch gekennzeichnet,**
**dass** der Behälter (11) Seitenverstärkungsrippen (131) umfasst, die wie Rippen festgelegt sind, die sich auf der Innenseite der Seitenwand (12) entlang der vorwiegenden Stromrichtung erweitern und die einen Anstieg der Wanddichte innen und gegenüber der Grundwand (111) aufweisen, wobei sich genannter Anstieg der Wanddichte in mindestens einer der, vorzugsweise beider, kreisförmigen und strahlenförmigen Richtungen von genannten Seitenverstärkungsrippen (131) bzgl. der Zentralachse (X) erweitert, und wobei sich genannter Anstieg der Wanddichte vorzugsweise fortlaufend und mindestens nach innen bzgl. des Kapselinnenraumes erweitert.

3. Kapsel gemäß Ansprüche 1 oder 2 **dadurch gekennzeichnet, dass** der Behälter (11) Grundverstärkungsmittelrippen (132) umfasst, die sich in einer strahlenförmigen Gestaltung in der Grundwand (111) des Behälters (11) erweitern und die einen Anstieg der Wanddichte entlang der strahelnförmigen Richtung, vorzugsweise fortlaufend und schrittweise, Richtung Mitte der Grundwand (111) aufweisen.

4. Kapsel gemäß Ansprüche 1 bis 3 **dadurch gekennzeichnet, dass** sich mindestens teils der, vorzugsweise alle genannten erste und zweite Verstärkungsrippen (131, 132) in einer Reihe, vorzugsweise fortlaufend zueinander erstrecken, so um einen Anstieg mindestens annähernd fortlaufend der Wanddichte des Behälters (11) entlang der Seitenwand (12) und bis zur Mitte der Grundwand (111) festzulegen.

5. Kapsel gemäß Ansprüche 1 bis 4 **dadurch gekennzeichnet, dass** die Grundwand (111) eine Wanddichte aufweist, die sich Richtung der Mitte entlang mindestens teils der strahlenförmigen Erweiterung erweitert, so um größeren Strukturwiderstand an einem Zentralbereich der Grundwand (111) festzulegen.

6. Kapsel gemäß Ansprüche 1 bis 5 **dadurch gekennzeichnet, dass** die Grundwand (111) eine Wanddichte aufweist, die ein Verhältnis zwischen einer größeren und einer kleineren Wanddichte umfassend zwischen 1,1 und 4, vorzugsweise zwischen 1,2 und 2 aufweist, und
dass die Grundwand (111) eine größere Wanddichte mindestens der Seite stromaufwärts und mittig aufweist, die mindestens eins aufweist: eine Punktform, eine Kreisform, eine Strahlenform und eine Ringform.

7. Kapsel gemäß einer der Ansprüche 1 bis 6 **dadurch gekennzeichnet, dass** die Grundwand (111) ein Zentralbereich mit einer größeren Wanddichte aufweist, insbesondere umfassend die höchste Wanddichte (emax), als die Wanddichte eines Bereiches am Rande und neben genanntem Zentralbereich, insbesondere umfassend die mindeste Wanddichte (eₘᵢₙ), wobei sich mindestens teils des Bereiches der größeren Wanddichte weiter stromabwärts bzgl. der restlichen Grundwand (111) und sich genannter Zentralbereich in einer strahlenförmigen Erstreckung größer als 0,2, vorzugsweise größer als 0,3, insbesondere vorzugsweise ähnlich oder größer als 0,5 Male die eigenschaftliche Dimension definiert durch die Grundwand (111) erstreckt, insbesondere den Innendurchmesser des Behälters (11) neben der Grundwand (111).

8. Kapsel gemäß einer der Ansprüche 1 bis 7 **dadurch gekennzeichnet, dass** die Grundwand (111) eine Gestaltung aufweist, wobei mindestens die Seite stromaufwärts eine gewölbte Form aufweist, z.Bsp. kegelförmig, in dem sich der Scheitel stromaufwärts mindestens annähernd angereiht mit genannter Zentralachse (X) erstreckt, und so, dass die Wanddichte in das Zentralbereich bzgl. der Peripherie der Grundwand (111) ansteigt.

9. Kapsel gemäß einer der Ansprüche 1 bis 8 **dadurch gekennzeichnet, dass** die Grundwand (111) eine Seite stromabwärts aufweist, die eine Planenform aufweist, und
dass der Anstieg der Wanddichte mindestens fortlaufend entlang mindestens teils der strahlenförmigen Erstreckung der Grundwand (111) ist, vorzugsweise mindestens mittig davon.

10. Kapsel gemäß einer der Ansprüche 1 bis 9 **dadurch gekennzeichnet, dass** die Grundwand (111) eine Seite stromaufwärts aufweist, die auch eine Kegelform stromaufwärts erstreckend aufweist, so dass der Anstieg der Wanddichte an genannter strahlenförmigen Erstreckung bzgl. der restlichen strahlenförmigen Erstreckung auf der Peripherie der Grundwand (111) festgelegt ist.

11. Kapsel gemäß einer der Ansprüche 1 bis 10 **dadurch gekennzeichnet,**
**dass** die Grundwand (111) eine Grundausladung (114) ausweist, die sich stromabwärts entlang einer kreisförmigen Reihe erstreckt, in dem eine Ringgestaltung in der Nähe einer Seitenwandausladung (12) bestimmt ist, so um einen Hohlraum im Perimeter der Grundwand (111) zu begrenzen, wobei genannte Grundausladung (114) eine ähnliche Ausdehnung zu genannter Seitenwandausladung (12) spiegelt und eine Wanddichte größer als die Wanddichte von genannter Seitenwandausladung (12) aufweist.

12. Kapsel gemäß Anspruch 11 **dadurch gekennzeichnet,**
**dass** sich die stromabwärts gerichtete Oberfläche der Grundwand (111) in einer Ebene stromabwärts der Ebene von genanntem Hohlraum erstreckt, der mittels genannter Seitenwandausladungen (112) und Grundwand (114) festgelegt ist, und dass eine Vielzahl an strahlenförmigen Verbindungselementen vorgesehen ist, die entlang genanntem Hohlraum verteilt sind.

13. Kapsel gemäß einer der Ansprüche 1 bis 12 **dadurch gekennzeichnet,**
**dass** die Grundwand (111) eine Vielzahl an Durchflusszonen (113) aufweist, vorgesehen mit verlängerter Form, insbesondere mit einem Verhältnis zwischen Länge und Breite zwischen 2 und 10 umfasst, vorzugsweise zwischen 3 und 6, wobei sich ein Teil der genannten Durchflusszonen (1131) entlang einer Richtung mindestens annähernd strahlenförmig und mindestens ein Teil der genannten Durchflusszonen (1132) entlang einer kreisförmigen Richtung erstrecken.

14. Kapsel gemäß einer der Ansprüche 1 bis 13 **dadurch gekennzeichnet,**
**dass** die Grundwand (111) eine Vielzahl an Durchflusszonen (113) erste Durchflusszonen (1131) von strahlenförmiger Richtung aufweist, vorgesehen an einem Zentralbereich, das eine größere Wanddichte aufweist, und zweite Durchflusszonen (1132) von kreisförmiger Richtung in der Peripherie vorgesehen ist, die eine kleinere Wanddichte aufweist, wobei genannte erste und zweite Durchflusszonen (1131, 1132) eigenschaftliche Dimensionen aufweisen, insbesondere Länge und Weite mindestens annähernd ähnlich.

15. Kapsel gemäß einer der Ansprüche 1 bis 14 **dadurch gekennzeichnet,**
**dass** die Grundwand (111) eine Vielzahl an ersten Durchflusszonen (1131) aufweist, angeordnet entlang mindestens annähernd der strahlenförmigen Richtung, vorgesehen an einem Zentralbereich von größerer und/oder ansteigenden Wanddichte der Grundwand (111), und
**dass** die Grundwand (111) eine Vielzahl an zweiten Durchflusszonen (1132) aufweist, angeordnet entlang einer mindestens annähernden Winkelrichtung, vorgesehen an einer Peripherie von kleinerer und/oder fortlaufenden Wanddichte der Grundwand (111).

16. Kapsel gemäß einer der Ansprüche 1 bis 15 **dadurch gekennzeichnet,**
**dass** die Grundwand (111) eine Vielzahl an Bereichen angepasst für den Durchfluss umfasst, wobei genannte Bereiche für den Durchfluss (113) vorgesehen als mindestens eins von: Öffnungen und geschwächte Materialbereiche so angepasst, um unter dem Einfluss des hydraulischen Drucks stromaufwärts davon zu brechen.

17. Kapsel gemäß einer der Ansprüche 1 bis 16 **dadurch gekennzeichnet,**
**dass** die zusammengesetzte Substanz eine Zusammensetzung aufweist, die Naturfasern beinhaltet, beinhaltend mindestens eins, vorzugsweise mindestens zwei aus der Naturfasernliste, entstehend aus der Sachbearbeitung von:
- grüne Kaffeebohnen;
- Zimt;
- Rohrzucker;
- Mais;
- Maniok.

18. Kapsel gemäß einer der Ansprüche 1 bis 17 **dadurch gekennzeichnet,**
**dass** die zusammengesetzte Substanz eine thermoplastische Matrix verstärkt mit Naturfasern aufweist, beinhaltend Fasern aus Kaffeesilberhäutchen, und
**dass** die polymerische Matrix, die die Silberhäutchenfaser einteilt, Polymere aus natürlichem Ursprung umfasst, beinhaltend Cellulosederivate und aliphatische Polyester.

## Revendications

1. Capsule de préparation de produits comestibles, tels que par exemple, des breuvages aromatiques,
ladite capsule (1) comprenant une partie container (11) et une partie couvercle (12),
la partie container (11) présentant un mur de base (111) s'agissant également du mur de sortie du breuvage, et un mur latéral (112), s'étendant par rapport à un axe central (X) et avec une configuration structurelle adaptée aux pressions intérieures résistant à au moins 4 bar, de préférence à au moins 8 bar,
la partie de container (11) fournie dans une substance composite, présentant une composition qui inclut des biopolymères,
**caractérisée par le fait que** la partie container (11) présente des moyens de renforcement, y compris :
- des moyens de renforcement latéral (131) configurés afin qu'ils représentent une augmentation de l'épaisseur du mur latéral (112) vers le mur de base (111) et
- des moyens de renforcement de base (132) qui représentent une augmentation de l'épaisseur du mur de base (111) vers le centre du mur de base (111),
où les dits moyens de renforcement (131, 132) sont fournis comme des côtes qui s'étendent dans la surface intérieure de la partie container (11), afin que cela fournisse une augmentation localisée de l'épaisseur du mur de la partie container (11), lorsque vue sur la coupe latérale, ladite augmentation de l'épaisseur du mur, généralement s'étendant dans la direction en aval et vers le centre de celui-ci.

2. Capsule selon la revendication 1 **caractérisée**
**par le fait que** la partie container (11) comprend des côtes de renforcement latéral (131) fournies comme des côtes qui s'étendent dans la face vers l'intérieur du mur latéral (12) le long de la direction du flux dominant et qui présentent une augmentation de l'épaisseur du mur vers l'intérieur et vers l'extérieur du mur de base (111), où ladite augmentation de l'épaisseur du mur s'étend dans, au moins l'une, mais de préférence les deux, directions circulaire et radiale des dites côtes de renforcement latéral (131), par rapport à l'axe central (X) et où ladite augmentation de l'épaisseur du mur s'étend de préférence de manière continue et au moins, vers l'intérieur par rapport à l'intérieur de la capsule.

3. Capsule selon la revendication 1 ou 2, **caractérisée**
**par le fait que** la partie container (11) comprend des côtes de renforcement de base (132) qui s'étendent dans une configuration radiale sur le mur de base (111) de la partie container (11) et qui présentent une augmentation de l'épaisseur du mur le long de la direction radiale, de préférence de manière continue et graduelle, dans la direction de la région centrale du mur de base (111).

4. Capsule selon les revendications 1 à 3, **caractérisée**
**par le fait qu'**au moins une partie, de préférence toutes les dites première et seconde côtes de renforcement (131, 132) s'étendent d'une manière alignée par rapport à l'un et à l'autre, de préférence s'étendent d'une manière continue par rapport à l'un et à l'autre, afin de fournir une augmentation au moins approximativement continue de l'épaisseur du mur de la partie container (11) le long d'un mur latéral (12) et jusqu'à la région centrale du mur de base (111).

5. Capsule selon les revendications 1 à 4, **caractérisée**
**par le fait que** le mur de base (111) présente une épaisseur du mur qui augmente dans la direction de la région centrale, le long d'au moins une partie de l'extension radiale, afin de pouvoir fournir une plus grande résistance structurelle dans une région centrale du mur de base (111).

6. Capsule selon les revendications 1 à 5, **caractérisée**
**par le fait que** le mur de base (111) présente une épaisseur de mur qui présente une relation entre une épaisseur de mur plus grande et plus petite, comprise entre 1,1 et 4, de préférence comprise entre 1,2 et 2 et
**par le fait que** le mur de base (111) présente une épaisseur de mur plus grande au moins sur la face orientée en amont et dans une région centrale qui présente au moins : une forme de point, une forme circulaire, une forme radiale et une forme en anneau.

7. Capsule selon une revendication quelconque entre 1 et 6, **caractérisée**
**par le fait que** le mur de base (111) présente une région centrale avec une plus grande épaisseur de mur, en particulier y compris l'épaisseur de mur maximale (eₘₐₓ) que l'épaisseur de mur d'une région périphérique et adjacente à la dite région centrale, en particulier y compris l'épaisseur de mur minimale (eₘᵢₙ), où au moins une partie de la région d'une plus grande épaisseur de mur s'étend en outre en aval par rapport au mur restant de base (111) et où ladite région centrale s'étend dans une extension radiale plus grande que 0,2, de préférence plus grande que 0,3, en particulier de préférence similaire ou plus grande de 0,5 fois la dimension caractéristique définie par le mur de base (111) en particulier le diamètre interne de la partie container (11) près du mur de base (111).

8. Capsule selon une quelconque revendication entre 1 et 7, **caractérisée**
**par le fait que** le mur de base (111) présente une configuration où au moins la face orientée en amont présente une forme de type convexe, par exemple de type conique, avec le vertex s'étendant en amont au moins approximativement aligné avec le dit axe centrale (X) et afin que l'épaisseur du mur augmente dans la région centrale en rapport avec la région périphérique du mur de base (111).

9. Capsule selon une quelconque revendication entre 1 et 8, **caractérisée**
**par le fait que** le mur de base (111) présente une face orientée en aval qui présente une forme planaire et
**par le fait que** l'augmentation de l'épaisseur du mur est au moins approximativement continue le long d'au moins une partie de l'extension radiale du mur de base (111), de préférence au moins dans une région centrale de celui-ci.

10. Capsule selon une quelconque revendication entre 1 et 9, **caractérisée**
**par le fait que** le mur de base (111) présente une face orientée en amont qui présente également une forme de type conique s'étendant en amont, afin que l'augmentation de l'épaisseur du mur soit fournie sur ladite extension radiale par rapport à l'extension radiale restante sur la région périphérique du mur de base (111).

11. Capsule selon une quelconque revendication entre 1 et 10, **caractérisée**
**par le fait que** le mur de base (111) présente une projection de base (114) qui s'étend en aval le long d'un alignement circulaire définissant une configuration en anneau à proximité de la projection du mur latéral (12) afin qu'il confine un espace de cavité dans la région périmètre du mur de base (111) où ladite projection de base (114) se projette sur une extension similaire à la dite projection du mur latéral (12) et présente une épaisseur de mur plus grande que l'épaisseur de mur de ladite projection du mur latéral (12).

12. Capsule selon la revendication 11, **caractérisée**
**par le fait que** la surface orientée en aval du mur de base (111) s'étend sur un plan en aval du plan dudit espace de type cavité configuré par lesdites projections du mur latéral (112) et le mur de base (114) et **par le fait qu'**il est fourni de préférence une pluralité d'éléments de connexion radiale distribuée le long dudit espace de cavité.

13. Capsule selon une quelconque revendication entre 1 et 12, **caractérisée**
**par le fait que** le mur de base (111) présente une pluralité de zones de passage de flux (113) fournie sous une forme allongée, en particulier avec un rapport entre la longueur et la largeur, compris entre 2 et 10, de préférence entre 3 et 6, où la partie des dites zones de passage de flux (1131) s'étend le long d'une direction au moins approximativement radiale et au moins une partie des dites zones de passage de flux (1132) s'étend le long d'une direction circulaire.

14. Capsule selon une quelconque revendication entre 1 et 13, **caractérisée**
**par le fait que** le mur de base (111) présente une pluralité des zones de passage de flux (113) y compris des zones de passage de premier flux (1131) de l'orientation radiale fournie dans une région centrale qui présente une épaisseur de mur plus grande et des zones de passage de second flux (1132) d'orientation circulaire fournie dans la région périphérique qui présente une plus petite épaisseur de mur, où les dites première et seconde zones de passage de flux (1131, 1132) présentent des dimensions caractéristiques, en particulier la largeur et la longueur, au moins approximativement similaire.

15. Capsule selon une quelconque revendication entre 1 et 14, **caractérisée**
**par le fait que** le mur de base (111) présente une pluralité de zones de passage de premier flux (1131) disposée le long d'une orientation au moins approximativement radiale fournie dans une région centrale d'une épaisseur de mur plus grande et/ou croissante du mur de base (111) et
**par le fait que** le mur de base (111) présente une pluralité de zones de passage de second flux (1132) disposée le long d'une orientation au moins approximativement angulaire fournie dans une région périphérique d'une épaisseur de mur plus petite et/ou constante du mur de base (111).

16. Capsule selon une quelconque revendication entre 1 et 15, **caractérisée**
**par le fait que** le mur de base (111) comprend une pluralité de régions adaptée au passage du flux, où lesdites régions de passage de flux (113) sont fournies comme au moins : des ouvertures et des zones de matériau affaibli adaptées afin qu'elles cassent sous l'effet de la pression hydraulique de celui-ci.

17. Capsule selon une quelconque revendication entre 1 et 16, **caractérisée**
**par le fait que** la substance composite présente une composition qui inclut des fibres naturelles y compris au moins une, de préférence au moins deux de la liste de fibres naturelles résultant du traitement de :
- grains de café vert ;
- cannelle ;
- canne à sucre ;
- maïs ;
- manioc ;

18. Capsule selon une quelconque revendication entre 1 et 17, **caractérisée**
**par le fait que** la substance composite présente une matrice thermoplastique renforcée avec des fibres naturelles, y compris de la fibre de membrane de café et
**par le fait que** la matrice polymère qui groupe la fibre de membrane comprend des polymères d'origine naturelle, y compris des dérivés de cellulose et de polyesters aliphatiques.
